# EUROPEAN PATENT SPECIFICATION

(11) **EP 4 011 499 B1**
(45) Date of publication and mention of the grant of the patent: **15.11.2023**
(21) Application number: 21202971.4
(22) Date of filing: 15.10.2021
(51) Int. Cl.: B05B 1/00, B05B 17/00

(54) **DEVICE FOR ATOMIZING ENERGIZED FLUIDS**
VORRICHTUNG ZUR ZERSTÄUBUNG VON ENERGETISIERTEN FLUIDEN
DISPOSITIF D'ATOMISATION DE FLUIDES ÉNERGISÉS

(30) Priority: 11.12.2020 IT 202000030473
(43) Date of publication of application: 15.06.2022
(73) Proprietor: Soligon, Franco, 31028 Vazzola (TV) (IT); Candiago, Maria Augusta, 31028 Vazzola (TV) (IT)
(72) Inventor: SOLIGON, Franco, 31028 Vazzola (TV) (IT)
(74) Representative: Modiano, Micaela Nadia

(56) References cited:
- CN-U- 212 046 660
- DE-U1- 20 119 295
- US-B1- 6 588 679

## Description

The present invention relates to a device for atomizing energized fluids. See for example CN212046660.

Nowadays it is known that our planet behaves like a magnet that emits its own electromagnetic field, which influences every physical/biological process and therefore also people, plants, water, ground and air.

It has been shown that the action of the natural electromagnetic field has a positive influence on the electrical exchanges that regulate cellular processes, and it is considered a regulating factor in our biorhythms.

All biological processes are in fact regulated by electrical exchanges, with variable-rhythm oscillations, which are characterized by particular frequencies.

The problem is also known of pollution of our planet.

It is thought that an energy imbalance exists that affects several aspects of human life and of which, in particular, the peaks of imbalance/pollution are found in artificial man-made environments, where humans live and work.

Big metropolitan areas, and also the countryside near big metropolitan areas, have levels of pollution that can be very high, which are due for example to vehicle exhaust, emissions from domestic heating, and industrial emissions into the atmosphere.

Deforestation further aggravates the problem, as it removes the natural filtering of the air by plants thus contributing in decreasing the concentration of ozone in the atmosphere.

There is literature that argues that, starting from the energy field of the Earth, energy stimulators could be used to raise the energy levels of the atmosphere. Doing this would boost the emission into the atmosphere of ionized particles (so that there are more ionized particles than polluted particles) and this would result in an energetic/molecular collision with switches of charge (the effects of which cannot be seen because it occurs at the atomic level) which would cause an invisible movement of ions which would stick to the pollutant molecules, weighing them down and bringing them to the ground where they will then be washed away.

The problem to be addressed is therefore how to raise the average energy level of a place.

Accordingly, the aim of the present invention is to provide a device the use of which makes it possible, in a rapid and simple manner, to purify mainly the air and, as a consequence, also the water and the ground.

Within this aim, an object of the present invention is to provide a device that makes it possible to improve the quality of the air via the abatement of fine dusts or other particulate.

Another object is to obtain a device that makes it possible, in a rapid and simple manner, to boost the energy of the air.

Another object is to provide a device that makes it possible to improve the quality of the air and also of the water and of the soil and of other contaminated groundmasses in the areas in which it is positioned.

Another object of the present invention is to provide a device that can be produced using known systems and technologies.

This aim and these and other objects which will become better apparent hereinafter are achieved by a device for atomizing energized fluids, characterized in that it is provided with a vertical support for two or more discs, with increasing diameters, and, at the upper end, a circular diffuser for atomizing said fluids which have been previously treated using means for receiving electromagnetic energy.

Further characteristics and advantages of the invention will become better apparent from the description of two preferred but not exclusive embodiments thereof, which are illustrated by way of non-limiting example in the accompanying drawings wherein:
Figure 1 is a first perspective view, from above, of the device;
Figure 2 is a view of a detail of the device;
Figure 3 is a second perspective view, from below, of the device;
Figure 4 is a first side view of the device;
Figure 5 is a plan view, from below, of the device;
Figure 6 is a cross-sectional view taken along the line VI-VI in Figure 5;

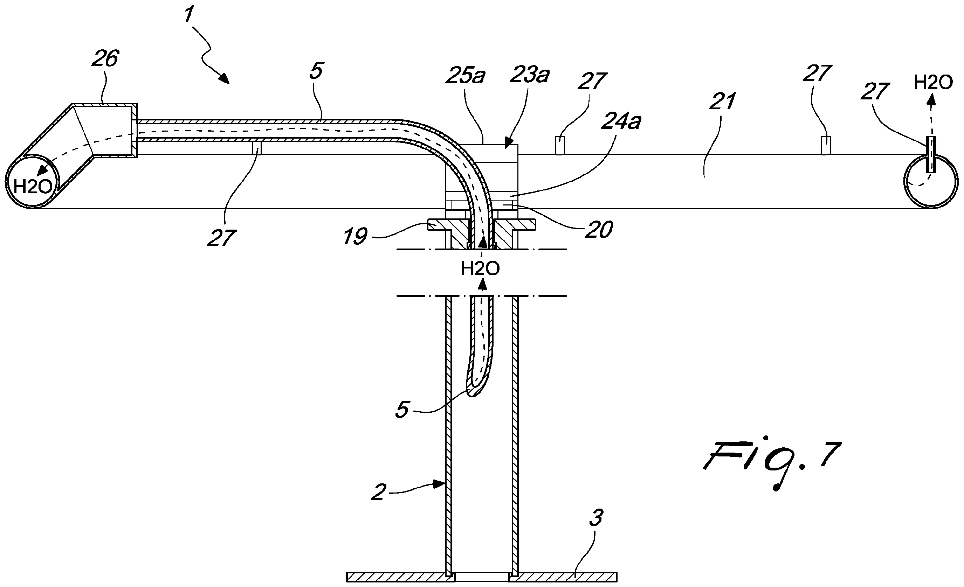

Figure 7 is a cross-sectional view of details of the device.

With reference to the figures, a device for atomizing energized fluids according to the invention is generally designated, in the specific embodiment shown, with the reference numeral 1.

In such device 1 the energizing of the fluids occurs by way of a device for accumulating electromagnetic energy and generating ionizing energy (not shown) which comprises means for conversion of the electromagnetic energy to ionizing energy, as shown in EP3386092.

The device 1 for atomizing energized fluids has a vertical support 2 which is constituted by a hollow tubular element of a chosen height and optionally selectively extensible, with conventional means, to a desired height.

The support 2 is connected at the base to a plate 3, which is preferably circular in plan, for anchoring to the ground.

Proximate to the plate 3, the support 2 has a first opening 4 accommodating a flexible conduit 5 for feeding an energized fluid, for example originating from a device like the one illustrated in EP3386092.

Purely for the purposes of example it should be noted that the energized fluid is fed using a suitable pump (not shown) at a pressure of approximately 70/100 bar.

The support 2 is associated, in the particular embodiment and starting from a region located above the first opening 4, a first disc 6, a second disc 7 and a third disc 8 which have increasing diameters.

The distance between the first, second and third discs 6, 7, 8 can be the most appropriate as a function of specific requirements, as can their diameters.

In the particular embodiment illustrated, each one of the first, second and third discs 6, 7, 8 is constituted by an annulus 9a, 9b, 9c from which three first dividers 10a, 10b, 10c, three second dividers 11a, 11b, 11c and three third dividers 12a, 12b, 12c extend radially and toward the center and are in their turn connected to the support 2.

Advantageously the first dividers 10a, 10b, 10c, second dividers 11a, 11b, 11c and third dividers 12a, 12b, 12c are arranged mutually angularly equidistant by 120°.

The connection of each one of the first dividers 10a, 10b, 10c, second dividers 11a, 11b, 11c and third dividers 12a, 12b, 12c to the support 2 is obtained by welding or riveting or bolting or, as illustrated in the particular embodiment, by means of two adapted first brackets 13a, 13b which are jaw-shaped and by three second brackets 14a, 14b, 14c and by three third brackets 15a, 15b, 15c which are substantially V-shaped, all of these brackets being conveniently contoured to be, at a first end, coupled on the lateral surface of the support 2 and, at a second end, coupled with or associated with or rested on the lower surface of each one of the first dividers 10a, 10b, 10c, three second dividers 11a, 11b, 11c, and three third dividers 12a, 12b, 12c.

For the second and third discs 7, 8 which are of greater diameter owing to their size, the use is possible of, respectively, two further fourth brackets 16a, 16b and of two fifth brackets 15a, 15b which can be clamped to the support 2, in the same way as the first two brackets 13a, 13b.

The upper end 18 of the support 2, which protrudes beyond the third disc 8, is associated with a plug 19, or a flange, which has an axial hole for the passage of the conduit 5: a bar 20 is diametrically associated or coupled on top of the plug 19 and has, at its ends, means for connection to an overlying diffuser 21 which is circular and is internally hollow.

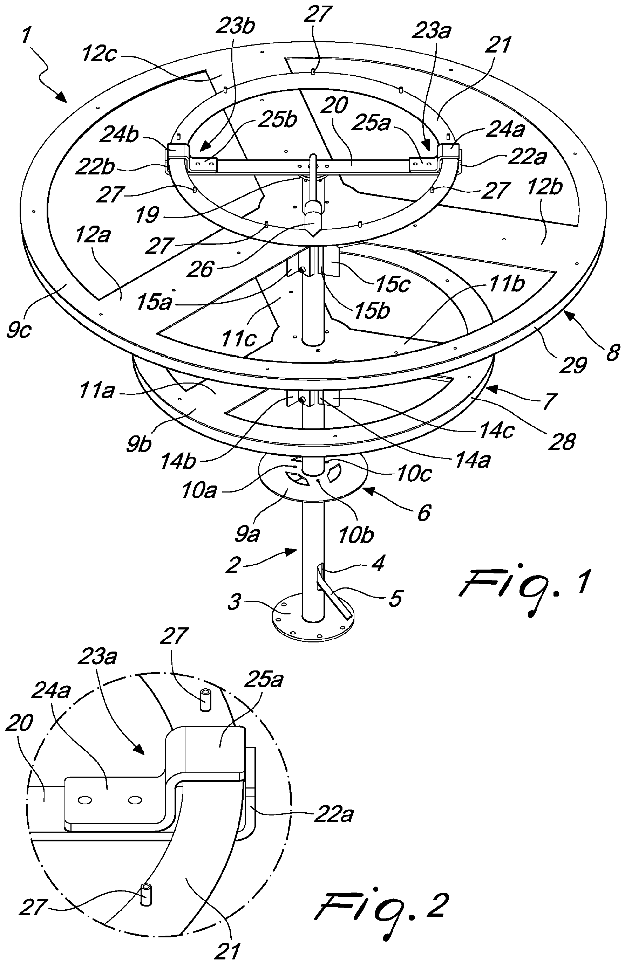

The means for connection are for example constituted by a pair of arc-shaped tabs 22a, 22b which protrude upward at the terminal ends of the bar 20, the outer lateral surface of the diffuser 21 abutting against them and the diffuser 21 being kept resting against the underlying bar 20 by means of S-shaped flanges 23a, 23b, a first wing 24a, 24b of which rests on the outer lateral surface of the diffuser 21 and the second wing 25a, 25b of which is fixed to the bar 20, as shown in Figure 2.

The terminal end of the conduit 5 is associated hermetically at a hollow sleeve 26 connected with the diffuser 21, so as to introduce the energized fluids therein.

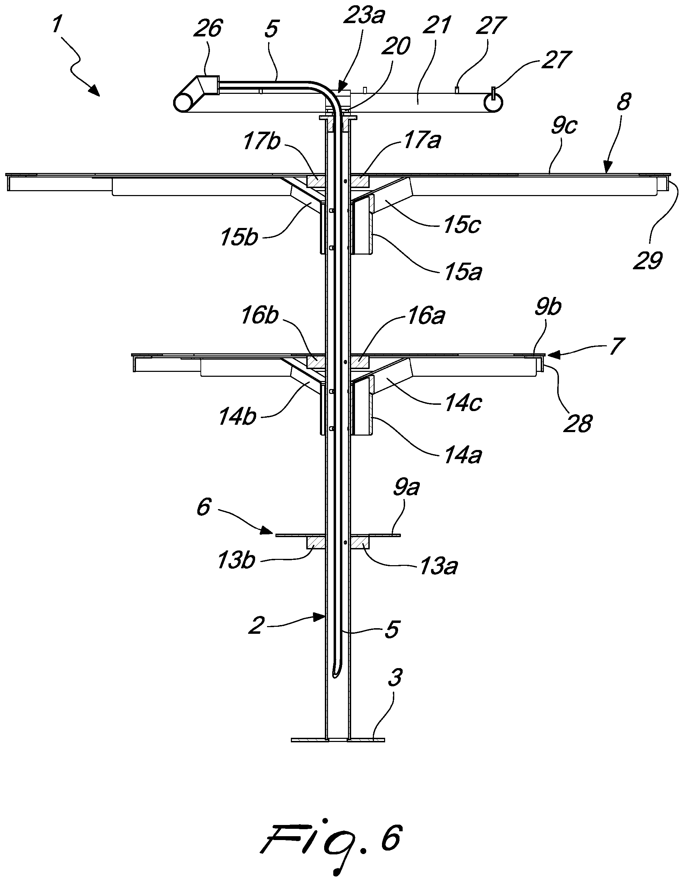

These fluids are introduced into the atmosphere in atomized form by means of adapted nozzles 27 which are associated with the diffuser 21 and which protrude upward, as illustrated in particular in Figure 6.

Advantageously the sleeve 26 is made of stainless steel and indicatively has a diameter equal to ¼ (one quarter) GAS.

The diameter of the diffuser 21 can vary as a function of specific requirements.

In the particular embodiment it has a smaller diameter than that of the third disc 8, being arranged concentrically therewith.

Purely for the purposes of example it should be noted that the first, second and third discs 6, 7, 8 are provided monolithically and made of plastic material, preferably of plexiglass, and the distance between the first disc 6 and the second disc 7 is approximately equal to 291.24 mm, as is the distance between the second disc 7 and the third disc 8.

The diameter of the first disc is approximately equal to 200 mm, that of the second disc 7 is approximately equal to 666.3 mm, that of the third disc is approximately equal to 1070.8 mm.

These measurements are dimensioned in order to generate, in the specific embodiment shown, an ionizing cone in the air of diameter approximately 2 km (kilometers), complying with a golden coefficient phi (φ) equal to 1.618.

In order to preserve the formation of the cone upward in the air, it should preferably not interfere with other structures, like houses, plants and apartment blocks: to this end it is possible for the support 2, or other components of the device, to be provided with an extension having heights that can be varied according to requirements.

The first, the second and the third disc are preferably informed so as to create a quantum chromatic spiral in a counterclockwise direction which raises the negative ions to great heights.

In practice it has been found that the invention thus described provides a solution to the intended aim and objects, a device having been achieved that, by virtue of its particular shape and combination of elements and means, makes it possible to feed energized fluids to the diffuser 21 which, through the nozzles 27, atomizes it into the air above.

The presence of the first, the second and the third annulus makes it possible, together with the nozzles 27, to generate an ionizing cone of the energized fluids, thus atomized, in the air thus making it possible, in a rapid and simple manner, to purify the air via the abatement of fine dusts or other particulate.

At the same time the device makes it possible, in a rapid and simple manner, to boost the energy of the air.

The invention thus conceived is susceptible of numerous modifications and variations, all of which are within the scope of the appended claims.

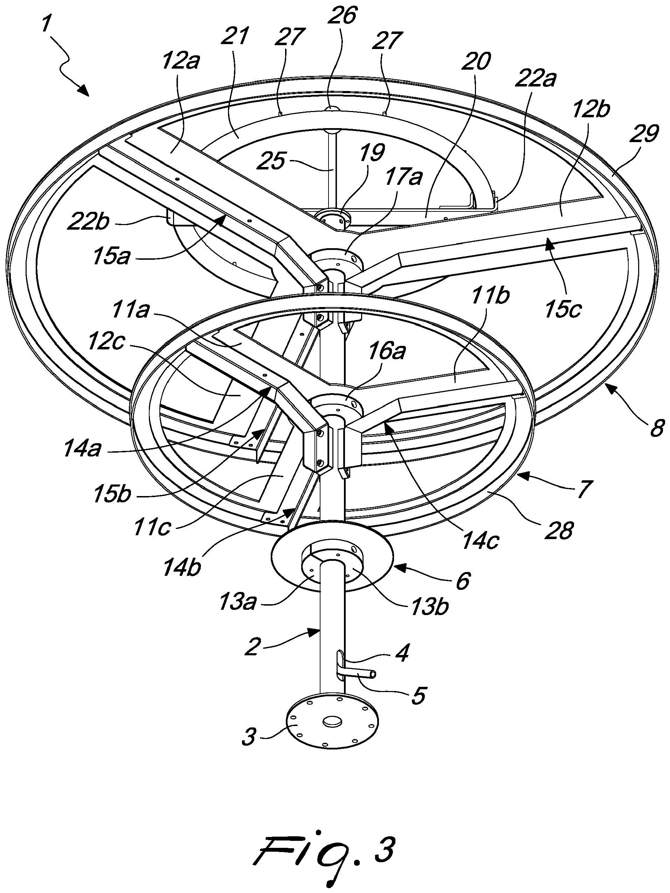

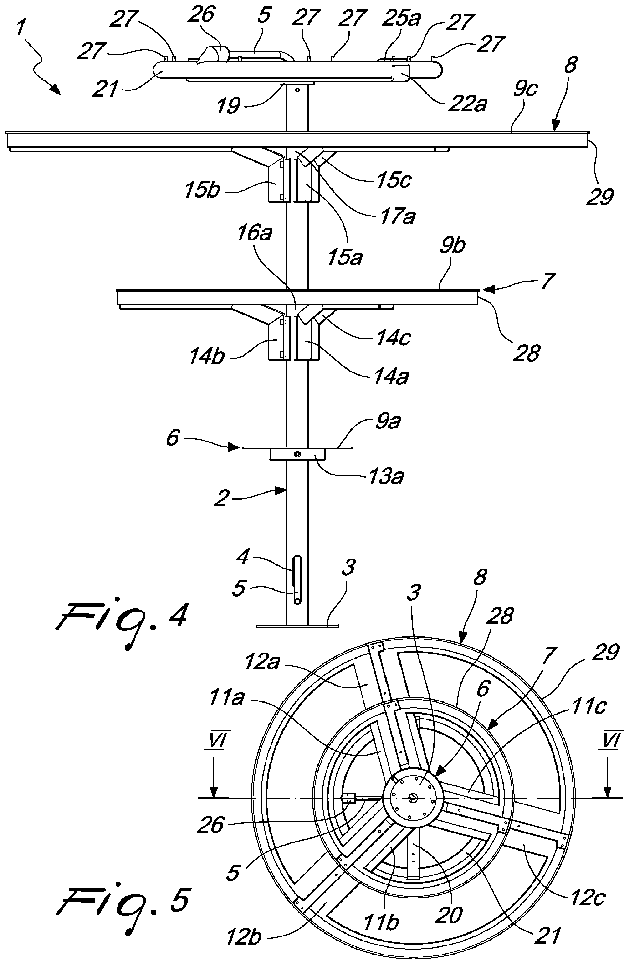

Thus, for example, the first brackets 13a, 13b, the fourth brackets 16a, 16b, 16c and the fifth brackets 17a, 17b, 17c can be constituted by a single bracket or disc; or a first angular element 28 and a second angular element 29 can be associated respectively with the ends of the second disc 7 and of the third disc 8, to support the second disc 7 and third disc 8, and engage the second brackets 14a, 14b, 14c and the third brackets 15a, 15b, 15c, as shown in Figures 3 and 5.

In practice the materials employed, provided they are compatible with the specific use, and the dimensions, may be any according to requirements and to the state of the art.

The disclosures in Italian Patent Application No. 102020000030473 from which this application claims priority.

## Claims

1. A device (1) for atomizing energized fluids, comprising a vertical support (2) which supports two or more discs (6, 7, 8), with increasing diameters, and, at the upper end, a circular diffuser (21) for atomizing said fluids which have been previously treated using means for receiving electromagnetic energy, said vertical support (2) being constituted by a hollow tubular element, which is connected at the base to a plate (3) that is circular in plan for anchoring to the ground, said support (2) having, proximate to said plate (3), a first opening (4) which accommodates a flexible conduit (5) for feeding said energized fluids, the terminal end of said conduit (5) is associated hermetically at a hollow sleeve (26) connected to said diffuser (21), so as to introduce therein said energized fluids, which are introduced into the atmosphere in atomized form by means of nozzles (27) which are associated with said diffuser (21) and protrude upward.

2. The device (1) according to claim 1, **characterized in that** said hollow tubular element is selectively extensible.

3. The device (1) according to one or more of the preceding claims, **characterized in that** said two or more discs (6, 7, 8) comprise a first disc (6), a second disc (7) and a third disc (8) with increasing diameters which are associated with said support (2), starting from a region located above said first opening (4), each one of said first, second and third discs (6, 7, 8) being constituted by an annulus (9a, 9b, 9c) from which three first dividers (10a, 10b, 10c), three second dividers (11a, 11b, 11c) and three third dividers (12a, 12b, 12c) extend radially and toward the center and are in their turn connected to said support (2).

4. The device (1) according to one or more of the preceding claims, **characterized in that** said first, second and third dividers (10a, 10b, 10c, 11a, 11b, 11c, 12a, 12b, 12c) are arranged mutually angularly equidistant by 120°, a connection of each one of said first, second and third dividers (10a, 10b, 10c, 11a, 11b, 11c, 12a, 12b, 12c) to said support (2) being obtained by welding or riveting or bolting or by means of two first brackets (13a, 13b) which are jaw-shaped and by three second brackets (14a, 14b, 14c) and three third brackets (15a, 15b, 15c) which are substantially V-shaped, all of said brackets being contoured to be, at a first end, coupled on the lateral surface of said support (2) and, at a second end, coupled with or associated with or rested on the lower surface of each one of said first, second and third dividers (10a, 10b, 10c, 11a, 11b, 11c, 12a, 12b, 12c).

5. The device (1) according to one or more of the preceding claims, **characterized in that** the upper end (18) of said support (2), which protrudes beyond said third disc (8), is associated with a plug or a flange (19) which has an axial hole for the passage of said conduit (5), a bar (20) being diametrically associated or coupled on top of said plug (19) and having, at its ends, means for connection to an overlying said diffuser (21) which is circular and is internally hollow, said means for connection being constituted by a pair of arc-shaped tabs (22a, 22b) which protrude upward at the terminal ends of said bar (20), the outer lateral surface of said diffuser (21) abutting against them and said diffuser (21) being kept resting against said underlying bar (20) by means of S-shaped flanges (23a, 23b), a first wing (24a, 24b) of which rests on the outer lateral surface of said diffuser (21) and the second wing (25a, 25b) of which is fixed to said bar (20).

6. The device (1) according to one or more of the preceding claims, **characterized in that** said first, second and third discs (6, 7, 8) are made of plastic material and a distance between said first disc (6) and said second disc (7) is substantially equal to 291.24 mm, and so is a distance between said second disc (7) and said third disc (8), the diameter of said first disc (6) being substantially equal to 200 mm, the diameter of said second disc (7) being substantially equal to 666.3 mm, the diameter of said third disc (8) being substantially equal to 1070.8 mm.

7. The device (1) according to one or more of the preceding claims, **characterized in that** said first, second and third discs (6, 7, 8) generate an ionizing cone in the air substantially of 2 km (kilometers), complying with a golden coefficient phi (φ) equal to 1.618, said first, second and third discs (6, 7, 8) being informed so as to create a quantum chromatic spiral in a counterclockwise direction which raises the negative ions to great heights.

8. The device (1) according to one or more of the preceding claims, **characterized in that** it further comprises fourth brackets (16a, 16b, 16c) and fifth brackets (17a, 17b, 17c), said first brackets (13a, 13b), said fourth brackets (16a, 16b, 16c) and said fifth brackets (17a, 17b, 17c) are constituted by a single bracket or disc.

9. The device (1) according to one or more of the preceding claims, **characterized in that** a first angular element (28) and a second angular element (29) are associated respectively with the ends of said second disc (7) and said third disc (8), to support said second disc (7) and said third disc (8), and engage said second brackets (14a, 14b, 14c) and said third brackets (15a, 15b, 15c).

## Patentansprüche

1. Eine Vorrichtung (1) zur Zerstäubung von energetisierten Fluiden, die einen vertikalen Träger (2) umfasst, welcher zwei oder mehr Scheiben (6, 7, 8) mit zunehmenden Durchmessern und am oberen Ende einen kreisförmigen Diffusor (21) zur Zerstäubung der Fluide trägt, welche zuvor mit Mitteln zum Empfang elektromagnetischer Energie behandelt wurden, wobei der vertikale Träger (2) in einem hohlen rohrförmigen Element besteht, das an der Basis mit einer Platte (3) verbunden ist, die zur Verankerung am Boden einen kreisförmigen Grundriss hat; wobei der Träger (2) in der Nähe der Platte (3) eine erste Öffnung (4) hat, welche eine flexible Leitung (5) für die Zufuhr der energetisierten Fluide aufnimmt; das terminale Ende der Leitung (5) ist hermetisch an einer hohlen Hülse (26) angeschlossen, die mit dem Diffusor (21) verbunden ist, um die energetisierten Fluide dort hineinzugeben, welche in atomisierter Form über Düsen (27), welche mit dem Diffusor (21) verbunden sind und aufwärts ragen, in die Atmosphäre entlassen werden.

2. Die Vorrichtung (1) gemäß Anspruch 1, **dadurch gekennzeichnet, dass** das hohle rohrförmige Element selektiv verlängerbar ist.

3. Die Vorrichtung (1) gemäß einem oder mehreren der obigen Ansprüche, **dadurch gekennzeichnet, dass** die zwei oder mehr Scheiben (6, 7, 8) eine erste Scheibe (6), eine zweite Scheibe (7) und eine dritte Scheibe (8) mit zunehmenden Durchmessern umfassen, die mit dem Träger (2) verbunden sind, ausgehend von einem Bereich oberhalb der ersten Öffnung (4), wobei sowohl die erste als auch die zweite und dritte Scheibe (6, 7, 8) aus einem Kreisring (9a, 9b, 9c) bestehen, von welchem sich drei erste Teiler (10a, 10b, 10c), drei zweite Teiler (11a, 11b, 11c) und drei dritte Teiler (12a, 12b, 12c) radial und zur Mitte hin erstrecken und wiederum mit dem Träger (2) verbunden sind.

4. Die Vorrichtung (1) gemäß einem oder mehreren der obigen Ansprüche, **dadurch gekennzeichnet, dass** die ersten, zweiten und dritten Teiler (10a, 10b, 10c, 11a, 11b, 11c, 12a, 12b, 12c) um 120° winklig äquidistant voneinander angeordnet sind; wobei eine Verbindung jedes der ersten, zweiten und dritten Teiler (10a, 10b, 10c, 11a, 11b, 11c, 12a, 12b, 12c) mit dem Träger (2) durch Schweißen, Nieten oder Schrauben oder mit Hilfe von zwei ersten Stützen (13a, 13b) erzielt wird, die backenförmig sind, und drei zweiten Stützen (14a, 14b, 14c) und drei dritten Stützen (15a, 15b, 15c), die im Wesentlichen V-förmig sind; wobei alle Stützen konturiert sind, um an einem ersten Ende mit der Seitenfläche des Trägers (2) gekoppelt zu werden und an einem zweiten Ende mit jedem der ersten, zweiten und dritten Teiler (10a, 10b, 10c, 11a, 11b, 11c, 12a, 12b, 12c) gekoppelt oder verbunden zu werden oder an der unteren Oberfläche derselben anzuliegen.

5. Die Vorrichtung (1) gemäß einem oder mehreren der obigen Ansprüche, **dadurch gekennzeichnet, dass** das obere Ende (18) des Trägers (2), das über die dritte Scheibe (8) hinausragt, mit einem Stöpsel oder einem Flansch (19) verbunden ist, der ein axiales Loch für die Hindurchführung der Leitung (5) hat, wobei eine Stange (20) diametral mit der Oberseite des Stöpsels (19) verbunden oder gekoppelt ist und an seinen Enden Mittel zur Verbindung mit dem darüber liegenden Diffusor (21) hat, welcher kreisförmig und innen hohl ist; wobei die Mittel zur Verbindung aus einem Paar bogenförmiger Klammern (22a, 22b) bestehen, die an den terminalen Enden der Stange (20) nach oben ragen; wobei die äußere Seitenfläche des Diffusors (21) an ihnen anliegt und der Diffusor (21) mit Hilfe S-förmiger Flansche (23a, 23b) an der darunter liegenden Stange (20) anliegend gehalten wird; wobei ein erster Flügel (24a, 24b) der Flansche an der äußeren Seitenfläche des Diffusors (21) anliegt und der zweite Flügel (25a, 25b) der Flansche an der Stange (20) befestigt ist.

6. Die Vorrichtung (1) gemäß einem oder mehreren der obigen Ansprüche, **dadurch gekennzeichnet, dass** die erste, die zweite und die dritte Scheibe (6, 7, 8) aus Kunststoffmaterial bestehen und ein Abstand zwischen der ersten Scheibe (6) und der zweiten Scheibe (7) im Wesentlichen gleich 291,24 mm ist und ebenso ein Abstand zwischen der zweiten Scheibe (7) und der dritten Scheibe (8), wobei der Durchmesser der ersten Scheibe (6) im Wesentlichen gleich 200 mm ist, der Durchmesser der zweiten Scheibe (7) im Wesentlichen gleich 666,3 mm ist und der Durchmesser der dritten Scheibe (8) im Wesentlichen gleich 1070,8 mm ist.

7. Die Vorrichtung (1) gemäß einem oder mehreren der obigen Ansprüche, **dadurch gekennzeichnet, dass** die erste, die zweite und die dritte Scheibe (6, 7, 8) in der Luft einen ionisierenden Kegel von im Wesentlichen 2 km (Kilometern) erzeugen, was mit einem goldenen Koeffizienten phi (φ) gleich 1,618 übereinstimmt; wobei die erste, die zweite und die dritte Scheibe (6, 7, 8) informiert werden, um eine Quanten-chromatische Spirale entgegen dem Uhrzeigersinn zu erzeugen, welche die negativen Ionen auf große Höhen hebt.

8. Die Vorrichtung (1) gemäß einem oder mehreren der obigen Ansprüche, **dadurch gekennzeichnet, dass** sie weiter vierte Stützen (16a, 16b, 16c) und fünfte Stützen (17a, 17b, 17c) umfasst, wobei die ersten Stützen (13a, 13b), die vierten Stützen (16a, 16b, 16c) und die fünften Stützen (17a, 17b, 17c) aus einer einzigen Stütze oder Scheibe bestehen.

9. Die Vorrichtung (1) gemäß einem oder mehreren der obigen Ansprüche, **dadurch gekennzeichnet, dass** ein erstes Winkelelement (28) und ein zweites Winkelelement (29) mit den Enden der zweiten Scheibe (7) beziehungsweise der dritten Scheibe (8) verbunden sind, um die zweite Scheibe (7) und die dritte Scheibe (8) zu tragen und in Eingriff mit den zweiten Stützen (14a, 14b, 14c) und den dritten Stützen (15a, 15b, 15c) zu stehen.

## Revendications

1. Dispositif (1) destiné à atomiser des fluides énergisés, comprenant un support vertical (2) qui supporte deux disques ou plus (6, 7, 8), avec des diamètres croissants, et, au niveau de l'extrémité supérieure, un diffuseur circulaire (21) destiné à atomiser lesdits fluides qui ont été préalablement traités à l'aide de moyens destinés à recevoir une énergie électromagnétique, ledit support vertical (2) état composé d'un élément tubulaire creux, qui est relié au niveau de la base à une plaque (3) qui est circulaire en plan afin d'être ancrée au sol, ledit support (2) ayant, près de ladite plaque (3), une première ouverture (4) qui contient un conduit flexible (5) destiné à fournir lesdits fluides énergisés, l'extrémité terminale dudit conduit (5) étant associée hermétiquement au niveau d'une gaine creuse (26) reliée audit diffuseur (21), de façon à introduire à l'intérieur lesdits fluides énergisés, qui sont introduits dans l'atmosphère sous forme atomisée à l'aide de buses (27) qui sont associées audit diffuseur (21) et dépassent vers le haut.

2. Dispositif (1) selon la revendication 1, **caractérisé en ce que** ledit élément tubulaire creux est sélectivement extensible.

3. Dispositif (1) selon une ou plusieurs des revendications précédentes, **caractérisé en ce que** lesdits deux disques ou plus (6, 7, 8) comprennent un premier disque (6), un deuxième disque (7) et un troisième disque (8) avec des diamètres croissants qui sont associés audit support (2), en partant d'une zone située au-dessus de ladite première ouverture (4), chacun desdits premier, deuxième et troisième disques (6, 7, 8) étant composé d'un anneau (9a, 9b, 9c) depuis lequel trois premiers séparateurs (10a, 10b, 10c), trois deuxièmes séparateurs (11a, 11b, 11c) et trois troisièmes séparateurs (12a, 12b, 12c) s'étendent radialement et vers le centre et sont à leur tour reliés audit support (2).

4. Dispositif (1) selon une ou plusieurs des revendications précédentes, **caractérisé en ce que** lesdits premiers, deuxièmes et troisièmes séparateurs (10a, 10b, 10c, 11a, 11b, 11c, 12a, 12b, 12c) sont mutuellement prévus de manière angulaire et équidistante à 120°, une liaison entre chacun desdits premiers, deuxièmes et troisièmes séparateurs (10a, 10b, 10c, 11a, 11b, 11c, 12a, 12b, 12c) et ledit support (2) étant obtenue par soudage, rivetage ou boulonnage ou à l'aide de deux premières fixations (13a, 13b) qui sont en forme de mâchoires et par trois secondes fixations (14a, 14b, 14c) et trois troisièmes fixations (15a, 15b, 15c) qui sont sensiblement en forme de V, toutes lesdites fixations étant à contours de façon à être, à une première extrémité, reliées sur la surface latérale dudit support (2) et, à une seconde extrémité, reliées ou associées à ou appuyées sur la surface inférieure de chacun desdits premiers, deuxièmes et troisièmes séparateurs (10a, 10b, 10c, 11a, 11b, 11c, 12a, 12b, 12c).

5. Dispositif (1) selon une ou plusieurs des revendications précédentes, **caractérisé en ce que** l'extrémité supérieure (18) dudit support (2), qui dépasse au-delà dudit troisième disque (8), est associée à un embout ou une bride (19) qui possède un orifice axial destiné au passage dudit conduit (5), une barre (20) étant diamétralement associée ou couplée sur la partie supérieure dudit bouchon (19) et ayant, à son extrémité, un moyen de raccordement audit diffuseur (21) qui est circulaire et creux à l'intérieur, ledit moyen de raccordement étant composé d'une paire de languettes en forme d'arc (22a, 22b) qui dépassent vers le haut aux extrémités terminales de ladite barre (20), la surface latérale externe dudit diffuseur (21) butant contre celles-ci et ledit diffuseur (21) reposant contre ladite barre sous-jacente (20) à l'aide de brides en forme de S (23a, 23b), dont une première ailette (24a, 24b) repose sur l'autre surface latérale externe dudit diffuseur (21) et dont la seconde ailette (25a, 25b) est fixée sur ladite barre (20).

6. Dispositif (1) selon une ou plusieurs des revendications précédentes, **caractérisé en ce que** lesdits premier, deuxième et troisième disques (6, 7, 8) sont composés de matériau plastique et une distance entre ledit premier disque (6) et ledit second disque (7) est sensiblement égale à 291,24 mm, tout comme une distance entre ledit deuxième disque (7) et ledit troisième disque (8), le diamètre dudit premier disque (6) étant sensiblement égal à 200 mm, le diamètre dudit second disque (7) étant sensiblement égal à 666,3 mm, le diamètre dudit troisième disque (8) étant sensiblement égal à 1070,8 mm.

7. Dispositif (1) selon une ou plusieurs des revendications précédentes, **caractérisé en ce que** lesdits premier, deuxième et troisième disques (6, 7, 8) génèrent un cône ionisant dans l'air sensiblement de 2 km (kilomètres), conforme à un coefficient doré phi (φ) égal à 1,618, lesdits premier, deuxième et troisième disques (6, 7, 8) étant formés de façon à créer une spirale chromatique quantique dans le sens inverse des aiguilles d'une montre qui font monter les ions négatif plus haut.

8. Dispositif (1) selon une ou plusieurs des revendications précédentes, **caractérisé en ce qu'**il comprend en outre des quatrièmes fixations (16a, 16b, 16c) et des cinquièmes fixations (17a, 17b, 17c), lesdites premières fixations (13a, 13b), lesdites quatrièmes fixations (16a, 16b, 16c) et lesdites cinquièmes fixations (17a, 17b, 17c) étant composées d'un seul support ou d'un seul disque.

9. Dispositif (1) selon une ou plusieurs des revendications précédentes, **caractérisé en ce qu'**un premier élément angulaire (28) et un second élément angulaire (29) sont associés respectivement aux extrémités dudit second disque (7) et dudit troisième disque (8), afin de supporter ledit deuxième disque (7) et ledit troisième disque (8), et engagent lesdites deuxièmes fixations (14a, 14b, 14c) et lesdites troisièmes fixations (15a, 15b, 15c).
